# EUROPEAN PATENT APPLICATION

(11) **EP 1 722 343 A1**
(43) Date of publication of application: **15.11.2006**
(21) Application number: 05103839.6
(22) Date of filing: 09.05.2005
(51) Int. Cl.: G09B 23/28, A47F 7/00

(54) **Pelvic model device for demonstration of an intimate product**

(71) Applicant: PAPER-PAK SWEDEN AB, 578 24 Aneby (SE)
(72) Inventor: Nylander, Olov, 578 32, Aneby (SE); Holényi, Katalin, 756 43, Uppsala (SE)
(74) Representative: Kraenzmer, Martin

(57) **Abstract**

The invention discloses a pelvic model device (1) and use of such pelvic model device (1) for demonstration of an intimate product (11). Said pelvic model device comprising, a ring portion (2) forming a waist region, an elongated bow portion (3) forming a crotch region, said bow portion (3) being attached at its end portions (4) to said ring portion (2). An open region (5) is formed between said ring portion (2) and bow portion (3) in use condition of said pelvic model device (1). Said open region (5) further extends through holes (6) such that at least one hole is provided on each side of said bow portion (3). Moreover, said bow portion (3) comprising a transparent portion.

## Description

### Field of the Invention

The invention discloses a pelvic model device, for demonstration of an intimate product.

### Technical Background

Show window figures or clothes dummies are conventionally used for product demonstrations of intimate products, such as diapers, incontinence articles and more commonly swimsuits and undergarments etc.

In the case of absorbent articles it is usually desirable to present and bring forward various functions in addition to the sole appearance of the product. Today's absorbent articles are often provided with a number of technical features that renders equal or more interest than that of the sole appearance. It is often experienced as difficult to clearly demonstrate these features and functions of an absorbent article by means of a show window figure or other conventional clothes dummies. In addition to being cumbersome and often voluminous these conventional demonstration means are not adapted to bring forward technical features and functions.

For a person demonstrating such intimate products it is also desirable to provide a pelvic model device which reduces the risk for embarrassing or inconvenient situations during demonstration. When launching a new intimate product comprising novel features and functions it is desirable to provide the necessary training means and understanding of the product.

Hence, it is desirable to present a solution for demonstration and testing of intimate products that is more easily handled and user-oriented towards bringing up function of the intimate product. Accordingly, there is a need for a device for demonstration of intimate products that provides for improved physical and visual accessibility.

### Summary of the Invention

The object of the present invention is to overcome the above issues and provide a pelvic model device according to the preamble of claim 1 with the improvements as defined in the characterising portion. Preferred embodiments are presented in the dependent claims. According to the invention there is provided a pelvic model device, for demonstration of an intimate product, comprising, a ring portion forming a waist region, an elongated bow portion forming a crotch region, said bow portion being attached at its end portions to said ring portion, wherein an open region is formed between said ring portion and bow portion in use condition of said pelvic model device, said open region further extends through holes such that at least one hole is provided on each side of said bow portion, and said bow portion comprising a transparent portion.

The pelvic model device according to the invention enables visibility of the inside as well as of the outside of the intimate product when applied to said pelvic model device. Furthermore, the open region allows for improved accessibility and physical treatment and demonstration of functions and technical features of the intimate product. A further benefit is that the pelvic model device is light weight and easy to carry.

Advantageously, said bow portion is pivotably attached to said ring portion. In this preferred embodiment the bow portion is pivotable such that the bow portion is aligned with the ring portion during storage and thus additional space saving is accomplished. In its storage condition it may easily be placed in a suitcase or bag together with demonstration articles and products.

Preferably, said ring portion being provided with means for adjustment such that the circumferential extent of said ring portion may be increased or decreased in order to demonstrate various models and sizes of an intimate product. Still more preferably, said bow portion being provided with means for adjustment such that the extension of the bow portion, in its propagation between said ring portion, is increasable or decreasable in order to be able to demonstrate various models and sizes of an intimate product.

Due to the possibility of changing the dimensions of the pelvic model device one sole embodiment can be used for demonstrating a full range of intimate products regardless of shape, size and model etc.

Suitably, said pelvic model device comprising a hole portion provided to said bow portion and said hole portion being adapted for connection to a liquid distribution device. Said hole portion is positioned in a corresponding position to the Pee-point for enabling a realistic test and/or demonstration of the absorption capabilities of an absorbent article. Advantageously, the surface of the bow portion is given a realistic surface tension.

Furthermore, said pelvic model device comprising a press device adapted for being pressed against an absorbent article arranged to said pelvic model device in order to illustrate liquid retaining capability. It is well known that the retaining capability is affected by the pressure on an absorbent article but it has been difficult to test this feature in an illustrative way by using conventional objects.

According to a preferred embodiment said ring- and bow portions are made of a transparent material. A transparent plastic material is suitably used for the major part of the product in order to provide for visibility and physical handling of the pelvic model device.

It is realised that a preferred embodiment of said pelvic model device is provided with an intimate product on the outside of said bow portion. Still more preferably, said pelvic model device is provided with an absorbent article on the outside of said bow portion.

It is a further object of the invention to enable use of a pelvic model device for demonstration of functions and technical features of intimate products, preferably absorbent articles.

In order to provide for easy handling the outside of the ring portion is preferably provided with a friction elements for enabling support and means for attaching an absorbent article around the pelvic model device.

Alternatively, said support for an absorbent article may be provided by pins arranged at suitable intervals around the ring portion. The pelvic model device is particularly suitable for teaching and testing functions and technical features of an absorbent article such as an incontinence guard, a diaper or a female hygiene product preferably combined by a suitable underwear. It is realised by the skilled person that also other intimate products such as underwear or swimwear may be exposed more clearly and in a cost efficient manner by utilizing a pelvic model device according to the invention.

### Brief Description of the Drawings

A currently preferred embodiment of the present invention will now be described in more detail, with reference to the accompanying drawings wherein:
Fig. 1a is a perspective view of a pelvic model device according to a first embodiment in its stowed position,
Fig. 1b is a perspective view of a pelvic model device according to a first embodiment in its use position,
Fig. 2 is a perspective view of a pelvic model device according to a second embodiment, and
Fig. 3 is a perspective view of a pelvic model device as seen from a top perspective wherein said pelvic model device is provided with an absorbent article.

### Detailed Description of Preferred Embodiments

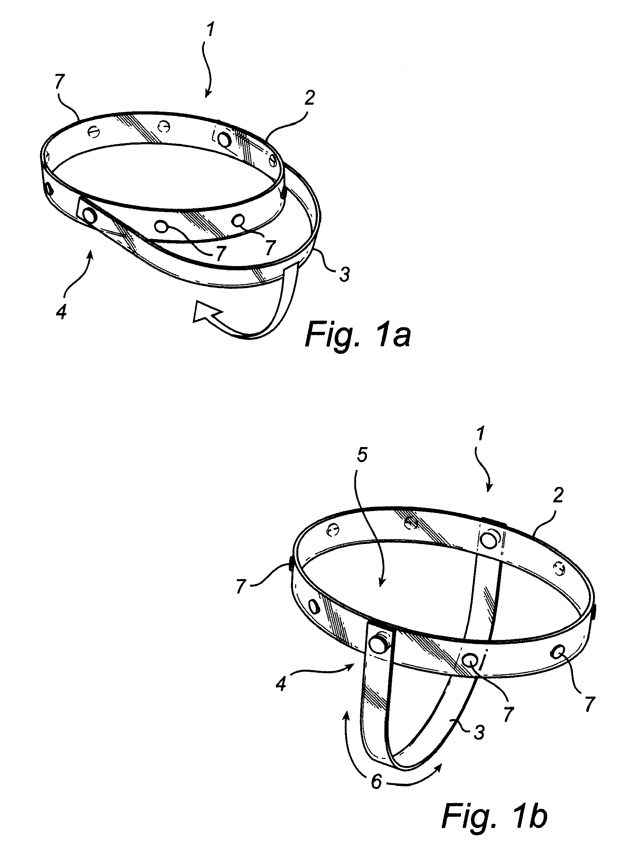

The invention will now be described with reference to a currently preferred embodiment. Referring to fig 1a a pelvic model device 1 is presented in a storage condition. The pelvic model device comprises a ring portion 2 and a bow portion 3. The end portions 4 of the bow portion 3 is pivotably arranged to said ring portion 2 such that it may be folded from a storage condition where the bow portion 3 substantially follows the propagation of the ring portion 2 between the attachment zones to a use condition. The end portions 4 of said bow portion 3 is attached to said ring portion 3 in a pivotable manner.

Referring now to fig. 1b the pelvic model device 1 is illustrated in a use condition. The bow portion 3 is conveniently folded in a substantially normal direction in relation to said ring portion 2 in the use condition. The folding operation is effected with some resistance such that the bow portion may be positioned at any location in its pivotal range. It is also realised from the given example that a hole 6 is accomplished on each side of the bow portion 3 in the use condition from the open region 5 and outwards. When the pelvic model device is in use condition an open region 5 is created within the pelvic model device aiming to provide physical access as well as full visibility from all angles of an intimate product placed thereto. Accordingly, the pelvic model device 1 is made of a transparent, light weight material such as transparent plastic. Preferably, polycarbonate based plastic is used. It is of importance to use a material that will provide for a rigid structure in order to facilitate applying the intimate products.

Furthermore, the ring portion 2 is provided with pins 7 for enabling a grip when an intimate product 11 is to be placed to the pelvic model device 1.

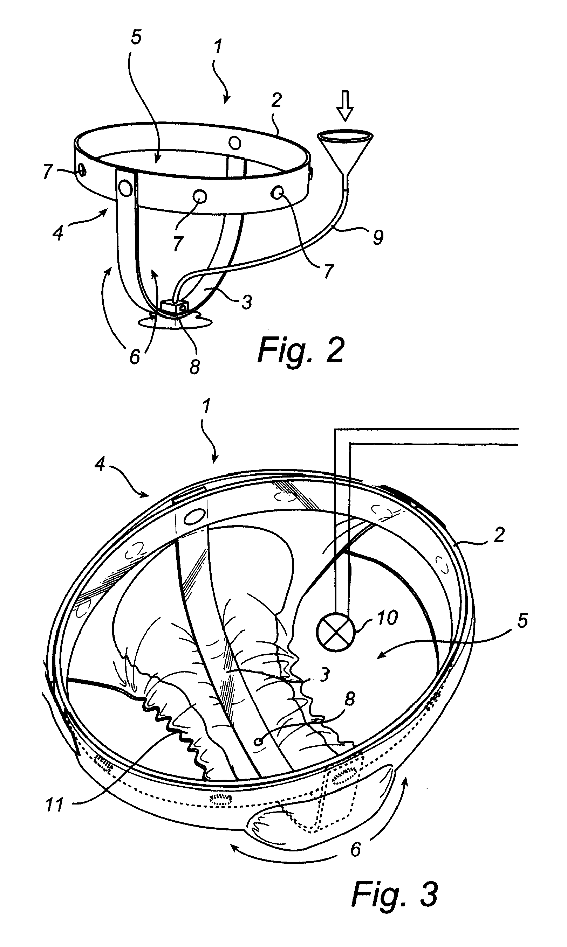

One important aspect of the invention is to clearly illustrate technical features and functions of the absorbent article. With reference to fig 2, said pelvic model device 1 comprising a hole portion 8 provided to said bow portion 3 and said hole portion 3 having a suitable shape of any kind and being adapted for connection to a liquid distribution device 9. Said hole portion 8 is positioned in a corresponding position to the Pee-point for enabling a realistic test and/or demonstration of the absorption capabilities of an absorbent article 11. The surface of the bow portion 3 is given a representative surface tension. During the test a given amount of coloured liquid is added to the liquid distribution device and the absorption can be monitored.

Another test is exemplified in fig 3 where a light source 10 is added to the preferred embodiment. When illuminating an intimate product, such as an absorbent article 11, the contours of the materials and compounds of said product will appear more clearly. For instance the distribution of compounds and material in an absorbent core will e.g. appear clearly.

In addition a press device (not shown) adapted for being pressed against an absorbent article in a suitable manner is arranged to said pelvic model device 1 in order to illustrate liquid retaining capability.

When an absorbent article is positioned to the pelvic model device 1 the softness of the article itself provides a cushioning effect to the pelvic model device after a gentle push towards the underlying surface. Thus, the pelvic model device may be able to stand still in a desired position utilizing the cushioning effect. The underlying surface may be a rotating disc.

It is realized by a person skilled in the art that the bow portion 3 may alternatively be attachable and detachable to said ring portion 2. The end portions 4 may be provided with complementary attaching arrangement to that of the ring portion 2. Furthermore, the attaching arrangement may encompass adjusting means in order to vary the size of the bow portion between the ring portion 2.

Furthermore, the ring portion 2 and the bow portion 3 may consist of a number of parts (not shown) constituting said portions.

In order to provide for easy handling the outside of the ring portion is preferably provided with a friction elements or similar for supporting the operation of applying an absorbent article around the pelvic model device 1.

Finally, it is realised that a cost efficient solution of demonstrating functions and technical features of an intimate product for care taking personnel, wearers etc. is accomplished by using a pelvic model device as depicted in the independent claims.

The simplicity in the design of the pelvic model device in combination with the open region and the transparency of at least the transparent portion of the bow portion brings focus to the demonstration objects and provides for comfortable and clear demonstrations of many aspects and functions of an intimate product. Intimate products in the present application involves absorbent articles, underwear, swimsuits and undergarments etc. Absorbent articles within the meaning of this application encompass female hygiene articles, diapers, incontinence guards and other disposable absorbent articles.

## Claims

1. A pelvic model device (1), for demonstration of an intimate product (11), **characterised in that** said pelvic model device (1) comprising,
a ring portion (2) forming a waist region,
an elongated bow portion (3) forming a crotch region, said bow portion (3) being attached at its end portions (4) to said ring portion (2), wherein
an open region (5) is formed between said ring portion (2) and bow portion (3) in use condition of said pelvic model device (1),
said open region (5) further extends through holes (6) such that at least one hole (6) is provided on each side of said bow portion (3),
and said bow portion (3) comprising a transparent portion.

2. A pelvic model device (1), according to claim 1, in which said ring portion (2) being provided with means for adjustment such that the circumferential extent of said ring portion (2) may be increased or decreased in order to demonstrate various models and sizes of an intimate product (11).

3. A pelvic model device (1), according to any one of claims 1-2, in which said bow portion (3) being provided with means for adjustment such that the extension of the bow portion (3), in its propagation between said ring portion (2), may be increased or decreased in order to be able to demonstrate various models and sizes of an intimate product (11).

4. A pelvic model device (1), according to any one of claims 1-3, in which said pelvic model device (1) comprising a hole portion (8) provided to said bow portion and said hole portion being adapted for connection to a liquid distribution device (9).

5. A pelvic model device (1), according to any one of claims 1-4, in which said ring- and bow portions (2, 3) are made of a transparent material.

6. A pelvic model device (1), according to any one of claims 1-5, in which said bow portion (3) is pivotably attached to said ring portion (2).

7. A pelvic model device (1), according to any one of claims 1-6, in which said pelvic model device (1) comprising a press device adapted for being pressed against an absorbent article arranged to said pelvic model device (1) in order to illustrate liquid retaining capability.

8. A pelvic model device (1), according to any one of claims 1-7, in which said pelvic model device (1) being provided with an intimate product (11) on the outside of said bow portion (3).

9. A pelvic model device (1), according to any one of claims 1-7, in which said pelvic model device (1) being provided with an absorbent article (11) on the outside of said bow portion (3).

10. Use of a pelvic model device (1), according to any one of the preceding claims, for demonstration of intimate products (11), preferably absorbent articles.
